## Europäisches Patentamt
## European Patent Office
## Office européen des brevets

(11) Veröffentlichungsnummer: **0 268 257**
**A2**

(12) **EUROPÄISCHE PATENTANMELDUNG**

(21) Anmeldenummer: 87116924.9

(22) Anmeldetag: 17.11.87

(51) Int. Cl.4: **B01J 20/26** , C08L 23/02 , C08L 57/00

(30) Priorität: 20.11.86 DE 3639675

(43) Veröffentlichungstag der Anmeldung:
25.05.88 Patentblatt 88/21

(84) Benannte Vertragsstaaten:
CH FR GB IT LI

(71) Anmelder: **Raschig GmbH**
**Mundenheimer Strasse 100**
**D-6700 Ludwigshafen/Rhein(DE)**

Anmelder: **Vysoká Skola**
**Chemisko-Technolockà**

**Praha 6(CS)**

(72) Erfinder: **Sulc, Jiri, Dipl.-Ing.**
**Na Pekne Vyhlidce 4**
**Praha 6(CS)**
Erfinder: **Kralicek, Jaroslav, Prof. Dipl.-Ing.**
**Zukovskeho 852**
**Praha 6, Ruzyné(CS)**
Erfinder: **Linek, Vaclav, Dipl.-Ing.**
**Novoborska 616**
**Praha 6(CS)**
Erfinder: **Krivsky, Zdenek, Dipl.-Ing.**
**Nova 32**
**Usti N.L.(CS)**
Erfinder: **Sinkule, Jiri, Dipl.-Ing.**
**Novorosijska 941**
**Praha 10(CS)**
Erfinder: **Raschig, Gert**
**Mundenheimer Strasse 100**
**D-6700 Ludwigshafen/Rhein(DE)**

(74) Vertreter: **Hubbuch, Helmut, Dipl.-Ing et al**
**Patentanwälte Dr. Rudolf Bauer Dipl.-Ing.**
**Helmut Hubbuch Dipl.-Phys. Ulrich**
**Twelmeier Westliche Karl-Friedrich-Strasse**
**29-31**
**D-7530 Pforzheim(DE)**

(54) **Verfahren zur Herstellung von hydrophilen Kolonnenfüllungen, aus organischen Polymeren.**

(57) Die Erfindung betrifft ein Verfahren zur Herstellung von hydrophilen Kolonnenfüllungen aus organischen Polymeren, durch Verformung, bei dem das geschmolzene Polymaterial in einer Form erstarrt, wofür zu einem hydrophoben Polymer, z.B. zum Polypropylen ein hydrophiles Polymer mit demselben oder niedrigerem Erstarrungspunkt und von niedrigerer Schmelzviskosität in Menge von 1-15 Gew.% bezogen auf das Grundpolymer zugegeben wird.

## "Verfahren zur Herstellung von hydrophilen Kolonnenfüllungen, aus organischen Polymeren"

Die Erfindung betrifft ein Verfahren zur Herstellung von hydrophilen Kolonnenfüllungen aus organischen Polymeren.

Die Füllung von Kolonnen besteht oft aus organischen Polymeren wie Polyolefinen, fluorierten Polyolefinen u.ä. Diese Polymere sind hydrophob, jedoch hat sich bei der Verarbeitung wässriger Lösungen, z.B. bei Absorption oder Desorption, die Verwendung von Füllungen als vorteilhaft erwiesen, deren Oberfläche hydrophiliert wurde. Die Hydrophilierung kann z.B. durch Sulfonierung mit Schwefeltrioxid mit darauffolgender Neutralisierung evt. durch die chemische Oxidierung oder durch Korona-Entladung durchgeführt werden. Solche Verfahren der Oberflächenhydrophilierung erfordern aber eine besondere nachträgliche Bearbeitung in einer speziellen Anlage, so daß die Produktion komplizierter und teuerer wird. Zugleich müssen Probleme der Umweltverschmutzung und des Arbeitschutzes gelöst werden. Hierzu ist es vorteilhaft, wenn für die Erzeugung von hydrophilierten Kolonnenfüllungen, und zwar sowohl der geschütteten wie auch der geordneten Kolonnenfüllungen, die üblichen Verfahren ohne nachträgliche Bearbeitung verwendet werden können. Die Verwendung von inherent hydrophilen Polymeren für diese Zwecke, z.B. des sulfonierten Polystyrols oder der Copolymere von Olefinen mit Äthylensulfonsäure, hat sich nicht bewährt, weil solcherart hydrophilierte Polymere in wässrigen Milieu stark quellen, was zur Deformation der Füllung und damit zu ihrer Verdichtung durch das eigene Gewicht führt, so daß der Gas-und Flüssigkeitsdurchfluss der Kolonne vermindert wird.

Der Erfindung liegt die Aufgabe zu Grunde, Kolonnenfüllungen der genannten Art so zu verformen, daß die Gas-bzw. Flüssigkeitsdurchlässigkeit im wesentlichen erhalten bleibt. Diese Aufgabe wird erfindungsgemäß dadurch gelöst, daß einem hydrophoben Polymer z.b. Polyprophylen, Polyäthylen u.ä., 1-15 Gew.-% eines hydrophilen Polymers mit niedrigerer Erstarrungstemperatur und niedrigerer Schmelzviskosität als das hydrophobe Grundpolymer, beigemischt wird. Als hydrophile Polymere lassen sich vorteilhaft das Copolymer von Äthylen mit Vinylacetat, das niedermolekulare sulfonierte Polystyrol, die sulfonierten Copolymere von Styrol mit Äthylen oder mit anderen Vinylmonomeren, . Copolymere der Äthylensulfonsäure mit anderen Vinylmonomeren, teilweise hydrolysierte Polymere und Copolymere von Acrylonitril oder Copolymere von Acrylsäureoder Methacrylsäureestern mit Acrylsäure oder Methacrylsäure, einsetzen. Wenn man als hydrophiles Polymer das Copolymer von Vinylacetat verwendet, wird das gewonnene Produkt noch der Einwirkung einer Lauge oder einer Lösung einer Mineralsäure unterworfen.

Die Erfindung geht also davon aus, daß es genügt, einem hydrophoben Polymer, wie z.B. Polypropylen, eine kleine Menge von einem hydrophilen Polymer zuzusetzen, das eine niedrigere Erstarrungstemperatur und Schmelzviskosität als das hydrophobe Grundpolymer besitzt.

Die auf diese Weise gewonnene Polymerenmischung kann mit allen Verfahren, bei denen das Polymer vorübergehend geschmolzen wird und danach in einer Form erstarrt, behandelt werden. Dabei kommt es zur Konzentration des zugegebenen hydrophilen Polymers auf der Oberfläche des Presslings, dessen Oberfläche dadurch dauerhaft hydrophiliert wird, ohne dass die mechanischen und physikalischen Eigenschaften des Presslings durch die bei Betrieb der Kolonne herrschenden Bedingungen beeinträchtigt werden. Es wird eine dauerhafte Wirkung erzielt, die weitgehend unabhängig ist vom Abreib und anderen mechanischen Faktoren. Diese Wirkung der dünnen hydrophilen Oberflächenschicht der Füllungen ist überraschend. Die hydrophile Schicht ist bei dem Verfahren nach der Erfindung tief im Grundpolymer verankert, ist dicker als bei der Oberflächenhydrophilierung mit den bis jetzt verwendeten Verfahren und ist auch im gequollenen Zustand gegen mechanische Einwirkungen widerstandsfähig. Die Dicke der gequollenen Oberflächenschicht liegt vorzugsweise unter 0.5mm.

Je größer der Unterschied zwischen den Erstarrungs punkten und Schmelzviskositäten beider Polymere ist desto niedriger kann der Gehalt des hydrophilen Polymeres in dem Polymerengemisch sein, weil seine Ausscheidung bzw. seine Konzentrierung auf der Oberfläche des Presslings oder in ihrer Nähe mit der Erhöhung dieses Unterschiedes steigt.

Als hydrophobe Grundpolymere können ausser dem meist üblichen isotaktischen Polypropylen z.B. Niederdruck-Hochmolekularpolyäthylen, Polyvinylfluorid auch andere halogenierte Polymere und Copolymere, bzw. ihre Gemische verwendet werden. Auf analoge Weise kann man alle temperaturbeständigen hydrophoben Polymere, wie z.B. Polyvinylfluorid, mit einem beliebigen hydrophilen Polymer oder Copolymer, wie sie im weiteren angeführt werden, anwenden, vorausgesetzt, daß das in einer verhältnismässig kleinen Menge zugesetzte hydrophile Material eine niedrigere Schmelzviskosität und einen niedrigeren Erstarrungspunkt hat.

Allgemein gilt, daß alle temperaturbeständigen hydrophilen oder nachträglich hydrophilierten Polymere mit hydrophoben Grundpolymeren nicht mischbaren Polymere, die in Vergleich mit dem Grundpolymer eine niedrigere Schmelzviskosität und Erstarrungspunkte haben, verwendet werden können. Die geeignete Menge des zugegebenen hydrophilen Polymer überschreitet in der Regel nicht 10 Gew.-% Gewöhnlich genügen 5 Gew.-% oder weniger. Die Bedingungen der Verarbeitung wie die Temperatur, der Druck und die Presszeit sind ähnlich , wie bei den hydrophoben Grundpolymeren, und die üblichen Produktionsanlagen brauchen nicht wesentlich geändert zu werden. Der Erstarrungspunkt und die Schmelzviskosität des hydrophilen Polymers können durch Weichmacherzugabe, wie Glycerol, Polyäthylenglykol u.ä., erniedrigt werden und dadurch kann eine größere Konzentration des hydrophilen Polymers in der Oberflächenschicht erreicht werden.

Hydrophile Füllungen gemäß der Erfindung können mit Vorteil in allen denjenigen Stoff-und bzw. Wärmeaustauschvorrichtungen verwendet werden, in denen eine wässrige Phase verarbeitet wird, das heißt, in Kolonnen für die Absorption und Desorption, Destilation, Chemisorption, Kühlung, kurz überall, wo eine wässrige Phase über die Füllung fließt.

Es können sämtliche Verformungsmethoden verwendet werden, bei welchen das polymere Material vorübergehen schmilzt, wie z.B. das Spritzgiessen, Pressen von Gemischen mit unschmelzbaren Füllstoffen bei erhöhten Temperaturen, Pressen von Gemischen von Thermoseten mit einer kleineren Menge eines hydrophilen linearen Polymers. In den Gemischen, die nach vorübergehendem Schmelzen harte Harze bilden z.B. in Phenol-Formaldehydgemischen,kann als saurer Kondensationskatalysator ein hydrophiles Copolymer verwendet werden, das freie Styrol-oder Athylensulfonsäuregruppen, bzw. SO$_4$H Gruppen enthält. Beim Pressen wird ein Teil des sauren Polymers aus der Oberfläche gedrückt, die dadurch der Neutralisierung auf Dauer hydrophil ist.

Allgemein kann man feststellen, dass sämtliche genügend temperaturbeständigen hydrophilen oder nachträglich hydrophilierbaren Polymere und Copolymere verwendbar sind, die sich mit den hydrophoben Grundpolymeren in der Schmelze mindestens teilweise mischen, mit denselben verträglich sind und im Vergleich mit denselben eine niedrigere Schmelzviskosität und Erstarrungstemperatur besitzen. Die geeignete Menge des zugesetzten hydrophilen Polymers übersteigt nicht 15% Gewicht, meistens genügen 5% oder noch weniger. Die Bedingungen beim Spritzguss oder Pressen wie Temperatur, Dauer und Druck sind ungefähr dieselben wie bei den hydrophoben Grundpolymeren, und geläufige Vorrichtungen brauchen meist nicht besonders angepasst zu werden, vorausgesetzt, daß eine gleichmässige Dosierung aller Komponenten gesichert ist. In einigen Fällen kann es vorteilhaft sein, sämtliche Komponenten als Granulate vorzubereiten, ein andermal genügt es, die hydrophile Komponente vor dem Schmelzen oder im Verlaufe desselben in die betreffende Einrichtung, z.B. in eine Strangpresse einzuführen. Die Mischgranulate können mehr oder weniger homogen sein, oder sie können die hydrophile Komponente in einer getrennten Oberflächenschicht enthalten. Solche Oberflächenschichten können selbsttätig bei der Herstellung von Mischgranulaten gebildet werden, z.B. beim Strangpressen eines Gemisches der beiden zusammengeschmolzenen Komponenten zu einem Band, welches dann auf übliche Weise zerschnitten wird; oder man kann auch ein hydrophiles Monomer auf der Oberfläche des Bandes oder des Granulates polymerisieren.

Der Schmelzpunkt und die Schmelzviskosität des hydrophilen Polymers kann durch Zusatz eines Weichmachungsmittels wie Glyzerin, Polyäthylenglykol u.a. herabgesetzt werden, wodurch auch eine höhere Konzentration des hydrophilen Polymers in der Oberflächenschicht erreicht werden kann.

Das erfindungsgemäße Verfahren ist weiterhin in Ausführungsbeispielen erläutert.

Ausführungsbeispiel 1

Eine Mischung von Granulaten, die aus 95 Teilen Polypropylen und 5 Teilen eines Vinylacetat-Äthylencopolymers mit 60% Vinylacetatgehalt besteht, wird als Ausgangsmaterial für den Spritzguss der Füllkörper für die Füllung von Absorptionskolonnen verwendet. Der Spritzguss wird bei 220° in kalte Formen durchgeführt.

Die solcherart erzeugten Füllkörper werden bei 60° in eine 5%-ige Natronlaugelösung getaucht. Die Füllkörper haben eine hydrophile mit Wasser vollständig benetzbare Oberfläche.

Ausführungsbeispiel 2

Zu 95 Teilen eines Polypropylengranulats werden 5 Teile eines teilweise hydrolysierten Polyacrylnitrils des Copolymers von Acrylonitril mit Acrylamid, das mit 60% Glycerol angequollen ist, zugegeben. Aus diesem Gemisch werden bei 220° die Fülkörper spritzgegossen, die ohne jegliche weitere Verarbeitung hohe Hydrophilität aufweisen. Der Gehalt des hydrophilen Polymers im Inneren der Füllkorper ist wesentlich niedriger als auf ihrer Oberfläche, so daß die Festigkeit der Füllkörper auch beim dauerhaften Kontakt mit einer wässrigen Phase nicht wesentlich erniedrigt ist.

## Ansprüche

1. Verfahren zur Herstellung von hydrophilen Kolonnenfüllungen aus organischen Polymeren durch Verformung, bei dem das geschmolzene Polymaterial in einer Form erstarrt, dadurch gekennzeichnet, daß zu einem hydrophoben Polymer, ein hydrophiles Polymer mit demselben oder einem niedrigeren Erstarrungspunkt und einer niedrigeren Schmelzviskosität in Menge von 1-15 Gew.-% auf das Grundpolymer zugegeben wird.

2. Verfahren nach Anspruch 1, dadurch gekennzeichnet, daß zu den hydrophoben Grundpolymer das Copolymer von Äthylen und Vinylacetat mit wenigstens 40% Vinylacetatbestandteilen, und/oder niedermolekulares sulfoniertes Polystyrol, sulfinierte Copolymere von Styrol mit Äthylen oder mit anderen Vinylmonomeren, Copolymere der Äthylensulfonsäure, teilweise hydrolysierte Polymere und Copolymere des Acrylonitrils oder Copolymere der Alkylacrylate oder Alkylmethacrylate mit Acrylsäure oder Methacrylsäure zugegeben werden.

3. Verfahren nach Anspruch 1, dadurch gekennzeichnet, daß das bei Verwendung eines Vinylacetatcopolymers gewonnene Produkt der Einwirkung einer Lauge oder einer Mineralsäure unterworfen wird.